# EUROPEAN PATENT APPLICATION

(11) **EP 0 685 954 A2**
(43) Date of publication of application: **06.12.1995**
(21) Application number: 95303687.8
(22) Date of filing: 31.05.1995
(51) Int. Cl.: H04M 1/02, H04M 1/18, H04M 1/23

(54) **Waterproofed portable telephone**

(30) Priority: 03.06.1994 JP 145415/94
(71) Applicant: KOKUSAI ELECTRIC CO., LTD., Tokyo 164 (JP)
(72) Inventor: Sato, Takeshi, c/o Kokusai Electric Co., Ltd., Tokyo 164 (JP); Sekine, Isamu, c/o Kokusai Electric Co., Ltd., Tokyo 164 (JP); Kuwayama, Tatsuo, c/o Kokusai Electric Co., Ltd., Tokyo 164 (JP); Okawa, Tatsuya, c/o Kokusai Electric Co., Ltd., Tokyo 164 (JP); Takahashi, Ryuichi, c/o Kokusai Electric Co.Ltd., Tokyo 164 (JP)
(74) Representative: Jennings, Nigel Robin

(57) **Abstract**

An electronic device, such as a portable telephone, includes a front panel (1) in which a plurality of holes (10) is formed. A respective key button (3) is received in each hole and is movable from the exterior of the panel by the application of pressure. An electronic circuit board (5) bearing a respective switch associated with each key button is situated behind the front panel and one contact (12) of each switch is positioned to be moved by the respective key button thereby closing or opening the switch. A flexible waterproof keypad member (2) extends over all the button holes (10) between the key buttons (3) and the circuit board (5), whereby movement of the or each key button is transmitted to the associated switch contact (12) through the keypad member (2). The keypad member (2) is pressed by the circuit board (5) into sealed engagement with the rear surface of the front panel over an annular area extending around the key button holes whereby water which passes into the interior of the device through the gaps between the key buttons and the edges of the holes in the front panel is positively prevented from gaining access to the circuit board.

## Description

The present invention relates to electronic devices, such a portable telephones, including a keypad, that is to say one or more buttons which may be engaged from the exterior of the device to actuate internal switching contacts. More specifically, the present invention relates to an electronic device including a front panel in which at least one hole is formed, a respective key button being received in each hole and movable from the exterior of the panel by the application of a pressure, an electronic circuit board bearing a respective switch associated with each key button, one contact of each of which is positioned to be removed by the associated key button.

No consideration has yet been given to the use of electronic devices of the type referred to above out of doors when it is raining, that is to say to making such devices waterproof. The keypad region of such devices is not normally waterproof whereby such devices can be damaged or rendered inoperative in wet conditions.

The rapid spread of portable electronic devices and the ever increasing requirements of consumers mean that there is an increasing need for the ability to render such electronic devices useable in outdoor applications when it is raining.

Accordingly, it is an object of the present invention to provide an electronic device of the type referred to above whose keypad area is waterproof, whereby the device is useable out of doors when it is wet. It is a further object of the present invention to provide such an electronic device with a waterproofed keypad portion with illuminated key buttons.

According to the present invention an electronic device of the type referred to above is characterised by a flexible waterproof keypad member extending over all the button holes between the key buttons and the circuit board, whereby movement of the or each key button is transmitted to the associated switch contact through the keypad member, the keypad member being in sealed engagement with the rear surface of the front panel over an annular area extending around the key button holes. Thus the electronic device in accordance with the invention, which preferably has a plurality of key buttons, includes a flexible waterproof keypad member which is sealed to the front panel around the holes and thus forms a positive barrier to water which gains access to the interior of the device through the gaps between the key buttons and the edges of the holes in the front panel in which they are received gaining access to the electronic circuit board and thereby damaging it or rendering it inoperative.

The keypad member may be retained in sealing engagement with the internal surface of the front panel in a variety of different ways but in the preferred embodiment the electronic device includes means, e.g. a plurality of engaging pawls or locking tabs, retaining the circuit board in position within it, the circuit board engaging the keypad member and retaining it in sealing engagement with the front panel.

The keypad member preferably includes an integral continuous peripheral rib or projection which projects from its front surface and is in sealing engagement with the front panel. This peripheral rib may have a planar surface in engagement with the front panel but it is preferred that it includes an integral sealing bead or projection extending thereform in sealing engagement with the front panel. This results in an increase in the contact pressure between the keypad member and the front panel and thus an increase in the integrity of the waterproof seal.

It is preferred also that the keypad member includes an integral continuous peripheral rib or projection in engagement with the circuit board, that is to say projecting from the rear surface of the keypad member.

The central portion of the keypad member overlying the key buttons and switch contacts may be generally planar but it is preferred that it is provided with projections on its rear surface at positions corresponding to those of the key buttons. When a key button is depressed it deflects the cooperating portion of the flexible keypad member and the force is transmitted to the associated switch contact through the associated projection.

In the preferred embodiment the circuit board includes at least one light-emitting element, e.g. a light emitting diode, and carries reflective material over at least part of its front surface, an opaque sheet, in which holes are formed at positions corresponding to those of the key buttons, being positioned between the circuit board and the keypad member, the keypad member being made of translucent material. Accordingly, light emitted by the or each light emitting element diffuses through the holes in the opaque sheet and is then visible from the exterior of the device, e.g. through the gaps between the key buttons and the edges of the holes in the front panel through which they pass. This illuminating function is enhanced if the key buttons themselves are made of translucent material and is further enhanced if the rear surface of the opaque sheet is white or a similar light colour which reflects a substantial proportion of the light incident on it.

Further features of the invention will be apparent from the following description of one specific embodiment of the invention which is given by way of example with reference to the accompanying drawings, in which:-
Fig. 1 is an exploded perspective view of a portable telephone in accordance with the present invention;
Fig. 2 is a sectional view on the line A-A in Figure 1;

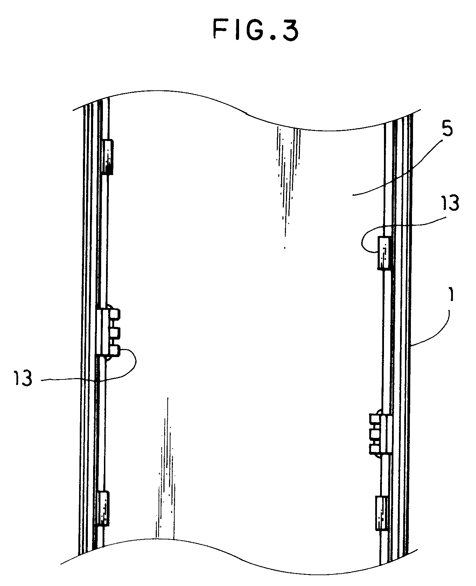

Fig. 3 is a scrap view showing the electronic circuit board mounted on the front panel with the interposition of the flexible keypad member;

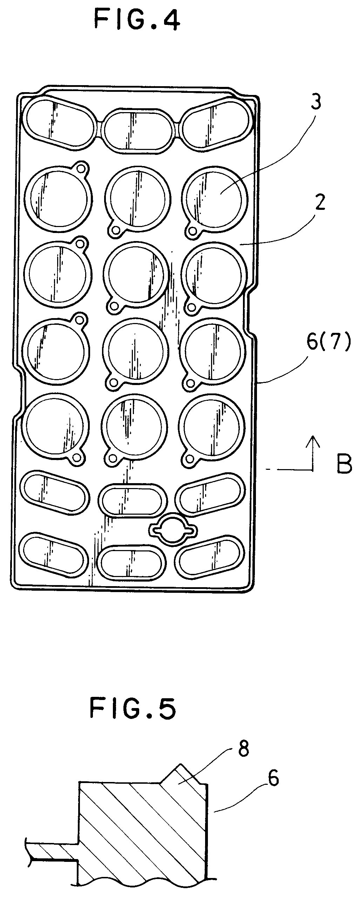

Fig. 4 is a plan view of the keypad member; and
Fig. 5 is an enlarged scrap view seen in the direction of the arrow B in Fig. 4.

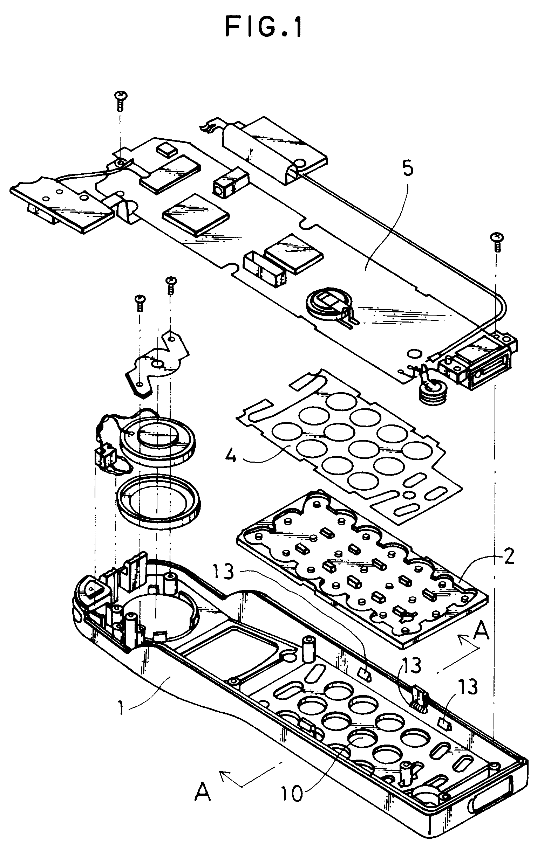

Fig. 1 shows certain of the components of a portable telephone, in which reference numeral 1 represents the front panel, 2 represents a flexible keypad member of translucent, e.g. plastic or elastomeric material bonded to the key buttons 3 of the telephone, 4 is a light-leakproof or opaque sheet with punched holes, which correspond to the key buttons 3, and 5 is an electronic circuit board.

The keypad member 2 is provided with an upstanding peripheral rib or projection 6 on its front surface and a similar rib 7 on its rear surface, both of which are of resilient material and extend over the entire periphery of the member 2. Formed on the outer edge of the upper surface of the front rib 6 there is an integral conical projection or sealing bead 8 which is readily compressible and deformable extending over its entire periphery. Extending from the rear of the keypad member 2 is a plurality of pressing projections 9 at positions corresponding to the centre of each of the key buttons 3.

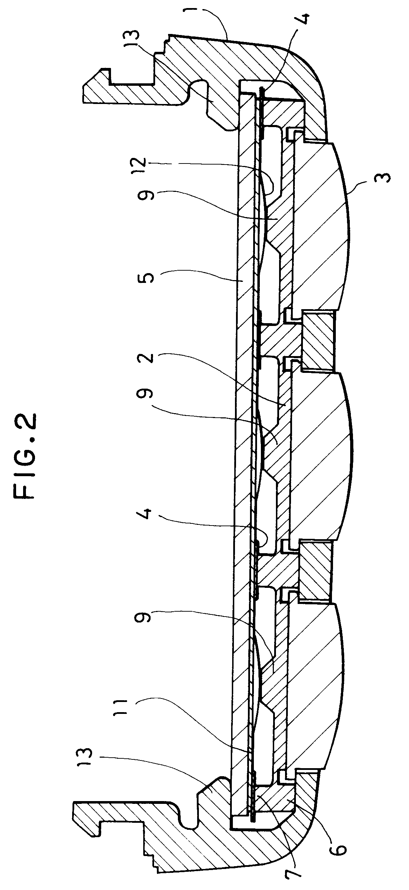

The key pad member 2 is arranged on the rear side of the front panel 1 and the key buttons 3 protrude through button holes 10 in the front panel 1 and contact the front surface of the keypad member 2. The electronic circuit board 5 is situated in contact with the keypad member 2 via the opaque sheet 4. The circuit board 5 carries a sheet key 11, respective contact points 12 which are contacted by the pressing projections 9. Situated at three spaced positions on each side wall of the front panel 1 are engaging pawls 13 which, in use, engage the circuit board 5 and retain it in position. This engagement is effected by compressing the front and rear ribs 6,7 between two spaced surfaces, as seen in Fig. 2.

The front rib 6, the rear rib 7, the leakproof sheet 4 and the electronic circuit board 5 are sandwiched between the surface of the front panel 1 and the engaging pawls 13.. The keypad member 2 is thus also immovably retained in position.

When the keypad member 2 is positioned, the edge 8 of the front rib 6 is pressed against the rear surface of the front panel 1 over the entire periphery of the keypad member and is compressed. A seal is thus provided between the front panel 1 and the peripheral area of the keypad member 2. The keypad member covers all the button holes provided in the key button portion of the front panel. Thus, rainwater entering through the button holes is intercepted by the keypad member and prevented from gaining access to the circuit board 5. As a result, rainwater can not enter into the portable telephone through gaps between the key buttons and the case.

Because three engaging pawls 13 are provided on each side of the casing, the keypad member 2 is evenly pressed against the front panel 1 via the electronic circuit board 5, and uniform sealing can be provided over the entire periphery of the keypad member. Furthermore, due to the presence of the rear projecting rib 7 which is opposed to the front projecting rib 6, the force transmitted via the electronic circuit board 5 is directly transmitted to the front rib 6 via the rear rib 7. This ensures an effective seal of the front rib 6.

When a key button 3 is pressed, a force is applied to the associated contact point 12 via the pressing projection 9 and operation of the associated switch occurs. The keypad member 2 and the key buttons 3 are made of a transparent material. Light emitting elements, such as light emitting diodes, are provided at predetermined points on the surface of the electronic circuit board 5. Also provided on the surface of the electronic circuit board 5, on at least part of the area thereof not occupied by the light emitting diodes, is light-reflective metal foil, e.g. of aluminium, which acts as a mirror. The front surface of the light-leakproof sheet 4 is black and the rear surface thereof is white. When the light emitting diodes are turned on, light from the light emitting diodes is reflected by the reflective foil and diffused between the electronic circuit board 5 and the light-leakproof sheet 4. The light leaks through the holes in the light-leakproof sheet 4 and the key buttons 3 are illuminated. The metal foil may be a plastic sheet with aluminium deposited on it.

The sealing bead 8 need of course not necessarily be of conical shape, but may be of semi-circular, trapezoidal or rectangular shape or even omitted completely. Also, the key buttons 3 may be integrally moulded with the keypad member 2.

Thus, all the openings for the button holes in the front panel of the keypad portion are covered by the waterproof keypad member whose peripheral edge is in sealing contact with the front panel. As a result, a simple and effective waterproof keypad is this provided.

## Claims

1. An electronic device, such as a portable telephone, including a front panel (1) in which at least one hole (10) is formed, a respective key button (3) being received in each hole and movable from the exterior of the panel (1) by the application of a pressure, an electronic circuit board (5) bearing a respective switch associated with each key button (3), one contact (12) of each of which is positioned to be moved by the associated key button (3), characterised by a flexible waterproof keypad member (2) extending over all the button holes (10) between the key buttons (3) and the circuit board, whereby movement of the or each key button (3) is transmitted to the associated switch contact (12) through the keypad member (2), the keypad member (2) being in sealed engagement with the rear surface of the front panel (1) over an annular area extending around the key button holes (10).

2. A device as claimed in claim 1 including means (13) retaining the circuit board (5) in position within it, the circuit board engaging the keypad member and retaining it in sealing engagement with the front panel (1).

3. A device as claimed in claim 1 or claim 2 in which the keypad member (2) includes an integral continuous peripheral rib (6) which projects from its front surface and is in sealing engagement with the front panel (1).

4. A device as claimed in claim 3 in which the peripheral rib (6) includes an integral sealing bead or projection (8) extending therefrom into sealing engagement with the front panel (1).

5. A device as claimed in claims 1 and 2 in which the keypad member (2) includes an integral continuous peripheral rib (7) in engagement with the circuit board (5).

6. A device as claimed in any one of the preceding claims in which the keypad member (2) is provided with projections (9) on its rear surface at positions corresponding to those of the key buttons (3).

7. A device as claimed in any one of the preceding claims in which the circuit board (5) includes at least one light-emitting element and carries reflective material over at least part of its front surface, an opaque sheet (4), in which holes are formed at positions corresponding to those of the key buttons (3), being positioned between the circuit board (5) and the keypad member (2), the keypad member (2) being made of translucent material.

8. A device as claimed in claim 7 in which the key buttons (3) are made of translucent material.
